# EUROPÄISCHE PATENTSCHRIFT

(11) **EP 1 502 782 B1**
(45) Veröffentlichungstag und Bekanntmachung des Hinweises auf die Patenterteilung: **25.06.2008**
(21) Anmeldenummer: 04016626.6
(22) Anmeldetag: 15.07.2004
(51) Int. Cl.: B60H 1/00

(54) **Vorrichtung zur Steuerung der Durchflussmenge eines fluiden Mediums durch eine Leitung**
Device for regulating the flow rate of a fluid in a conduit
Dispositif de régulation de débit d'un fluide dans une conduite

(30) Priorität: 28.07.2003 DE 10334570
(43) Veröffentlichungstag der Anmeldung: 02.02.2005
(73) Patentinhaber: Behr GmbH & Co. KG, 70469 Stuttgart (DE)
(72) Erfinder: Wolf, Walter, 71570 Oppenweiler-Zell (DE)

(56) Entgegenhaltungen:
- DE-A- 19 934 269
- GB-A- 1 162 292
- US-A- 3 958 605
- US-A- 4 535 811
- PATENT ABSTRACTS OF JAPAN Bd. 0080, Nr. 26 (M-273), 3. Februar 1984 (1984-02-03) & JP 58 183308 A (NISSAN JIDOSHA KK), 26. Oktober 1983 (1983-10-26)

## Beschreibung

Die Erfindung bezieht sich auf eine Vorrichtung zur Steuerung der Durchflussmenge eines fluiden Mediums durch eine Leitung, insbesondere durch eine Strömungsleitung wie eine Luftführungsleitung in einem Fahrzeug.

Heizungs- und Klimaanlagen in einem Fahrzeug benötigen Vorrichtungen zum Führen, Dosieren, Mischen und Absperren von Luft. Ein von einer Klimaanlage bereitgestellter und in einen Fahrzeuginnenraum durch eine Strömungsleitung geführter Luftstrom wird dabei durch Vorrichtungen zur Steuerung der Durchflussmenge eines fluiden Mediums (im weiteren kurz Vorrichtung genannt), wie Luftverteilungs-, Luftmisch- und/oder Luftsteuerungsvorrichtungen, in Teilströme geteilt, gemischt und/oder gesperrt. Mit anderen Worten: Mit Hilfe der Vorrichtung kann der Luftstrom bzw. die Durchflussmenge des Luftstromes durch eine Strömungsleitung vollständig abgeriegelt bzw. die Durchflussmenge auf Null geregelt werden oder die Strömungsleitung maximal für den Luftstrom geöffnet werden oder die Durchflussmenge des Luftstromes durch die Strömungsleitung auf ein Maximum eingestellt werden.

Eine derartige Vorrichtung ist beispielsweise aus der DE 198 19 280 A1 . Die dort bekannt Vorrichtung umfasst eine flügelartig angeordnete Klappe, die um eine Drehachse in einer Strömungsleitung zur Steuerung der Durchflussmenge eines fluiden Mediums durch die Strömungsleitung drehbar angeordnet ist zum Verschließen zwei Luftdurchlassöffnungen. Darüber hinaus sind auch Vorrichtungen mit mehreren flügelartig angeordneten Klappen bekannt, die zumeist voneinander getrennt, einzeln bewegbar oder starr miteinander verbunden, so dass jede Klappe nur zusammen mit der anderen bewegbar ist.

Ein Nachteil der oben beschriebenen Vorrichtung ist, dass sich Totwasserzonen in Fließrichtung hinter den verschwenkbaren Klappen bilden, so dass sich Strömungswirbel und störende Geräusche entwickeln.

Die Dokumente DE 199 34 269 und US 4,535,811 zeigen Luftstromsteuervorrichtungen gemäß dem Oberbegriff des Anspruchs 1.

Der Erfindung liegt daher die Aufgabe zugrunde, eine gegenüber dem Stand der Technik verbesserte, insbesondere Totwasserzonen verhindernde Vorrichtung zur Steuerung einer Durchflussmenge eines fluiden Mediums anzugeben.

Die Aufgabe wird erfindungsgemäß gelöst durch eine Vorrichtung gemäß dem Anspruch 1 zur Steuerung der Durchflussmenge eines fluiden Mediums durch eine Leitung, wobei mindestens drei Segmente derart gegenseitig gelenkig angeordnet sind, dass im Strömungsquerschnitt ein geschlossenes Vieleck mit einem durch Bewegung mindestens eines der Segmente variierenden Strömungswiderstand gebildet ist.

Die Erfindung geht dabei von der Überlegung aus, dass eine Strömungsleitung eine zugehörige Querschnittsfläche aufweist, die zur Steuerung der Durchflussmenge des Strömungsmediums entsprechend veränderbar ist. Hierzu sollte eine Vorrichtung mit einem im Strömungskanal variierenden Strömungswiderstand vorgesehen sein, welche strömungsausgangsseitig auftretende Totwasserzonen sicher vermeidet. Dies ist zum einen durch einen möglichst geringen Druckverlust der in der Strömungsleitung oder dem Strömungskanal angeordneten Vorrichtung erzielbar. Dies steht aber konträr zu der eigentlichen Funktion der Steuerung der Durchflussmenge durch die Vorrichtung, welche hierzu bedarfsweise einen höheren Widerstand (= Strömungswiderstand) und somit einen größeren Druckverlust aufweist. So wirken sich neben dem höheren Widerstand der Segmente der Vorrichtung selbst ebenfalls die durch diese erzeugten Wirbel steigernd auf einen Druckverlust in Strömungsrichtung gesehen aus. Um dennoch beide konträren Auslegungszielen gerecht zu werden, ist eine Vorrichtung mit einem möglichst die Strömungslinie unterstützenden Strömungswiderstand vorgesehen. Hierzu weist die Vorrichtung Segmente auf, die zueinander gelenkig unter Bildung eines Vielecks im Strömungsquerschnitt angeordnet sind.

In einer bevorzugten Ausführungsform weist das durch die Segmente gebildete Vieleck eine Trapezform auf. Für eine Trapezform des durch die Segmente gebildeten Vielecks umfasst die Vorrichtung bevorzugt vier Segmente. Je nach Querschnittsform der Strömungsleitung und/oder der vorgegebenen Querschnittsform der Vorrichtung können mehrere Segmente, bevorzugt vier Segmente unter Bildung eines Vieleck verbunden sein.

Zum Öffnen oder Verschließen des Strömungsquerschnitts der Strömungsleitung ist vorzugsweise mindestens eine Ecke des Vieleckes als virtuelle Drehachse oder der Mittelpunkt des Vielecks als virtuelle Drehachse bewegbar. Wird die Strömungsleitung axial vom Medium durchströmt, d.h. das Strömungsmedium ist im Wesentlichen in Richtung der Zentralachse geführt, verläuft die virtuelle Drehachse vertikal zur Zentralachse oder in Richtung der Normalebene der Zentralachse. Die Normalebene der Zentralachse ist dabei gemäß der üblichen Definition diejenige Ebene, zu der die Zentralachse orthogonal ist. Die Segmente sind um die virtuelle Drehachse orthogonal zur Zentralachse in der Leitung angeordnet und weisen in ihrer Projektion auf die Normalebene der Zentralachse quer und/oder längs zur Strömungsrichtung Überlappungen auf. Ist das Strömungsmedium im Wesentlichen in Richtung der Zentralachse geführt, so wird durch Änderung der Stellung der gegeneinander gelenkig gelagerten Segmente der Strömungsquerschnitt und der Strömungswiderstand für das Strömungsmedium verändert.

Die jeweilige Gelenkachse der Segmente ist durch eine Welle gebildet. Dabei sind die Segmente an der Welle schwenkbar angeordnet und durch eine Folie gebildet, die um die Welle verläuft. Für eine möglichst einfache und leichte Einstellbarkeit des Strömungswiderstands sind benachbarte Segmente unter Bildung jeweils einer Gelenkachse miteinander verbunden.

Für eine möglichst einfache Führung und Halterung der Vorrichtung in der Strömungsleitung, z.B. in einer Luftführungsleitung, ist mindestens eine der Gelenkachsen in einer Führungsschiene der Strömungsleitung geführt. Je nach Art und Aufbau der Vorrichtung sind auch mehrere oder alle Gelenkachsen in einer gemeinsamen oder in separaten zugehörigen Führungsschienen geführt.

Die mit der Erfindung erzielten Vorteile bestehen insbesondere darin, dass die Vorrichtung mit gegenseitig gelenkig zueinander angeordneten Segmenten einen weitgehend geringen Druckverlust aufweist, so dass Totwasserzonen sicher vermieden sind. Bedingt durch die Änderung der Stellung der Segmente um eine virtuelle Drehachse mittels der zueinander gelenkigen Anordnung der Segmente weist die Vorrichtung einen einfachen und besonders leichten Aufbau auf. Ein weiterer Vorteil besteht in der hohen Flexibilität und Möglichkeit der Anpassung der Vorrichtung. So kann durch Anzahl und Form der Segmente ein beliebiges Vieleck gebildet werden, welches zum einen an den Querschnitt der Strömungsleitung angepasst ist und zum anderen durch genaue Einstellung der Segmente eine einfache und homogene Steuerung des Strömungswiderstands und somit der Durchflussmenge des Strömungsmediums ermöglicht. Darüber hinaus ist die Vorrichtung als ein separates Modul herstellbar und somit einfach in bestehende Strömungsleitungen einsetzbar und nachrüstbar.

Ausführungsbeispiele der Erfindung werden anhand einer Zeichnung näher erläutert. Darin zeigen:
- Figur 1: schematisch eine Vorrichtung zur Steuerung der Durchflussmenge eines fluiden Mediums durch eine Strömungsleitung mit gelenkig zueinander angeordneten Segmenten in offener Stellung,
- Figur 2: schematisch die Vorrichtung gemäß Figur 1 in zumindest teilweise geschlossener Stellung,
- Figur 3: schematisch die Vorrichtung gemäß Figur 1 in geschlossener Stellung,
- Figur 4: schematisch einen Längsschnitt durch einen Strömungskanal mit drei verschiedene Stellungen aufweisenden Vorrichtungen zur Steuerung der Durchflussmenge, und
- Figuren 5: bis 8 schematisch verschiedene Ausführungsformen der gelenkig zueinander angeordneten Segmente, wobei die Figuren 7 und 8 erfindungsgemäße Vorrichtungen darstellen.

Einander entsprechende Teile sind in allen Figuren mit den gleichen Bezugszeichen versehen.

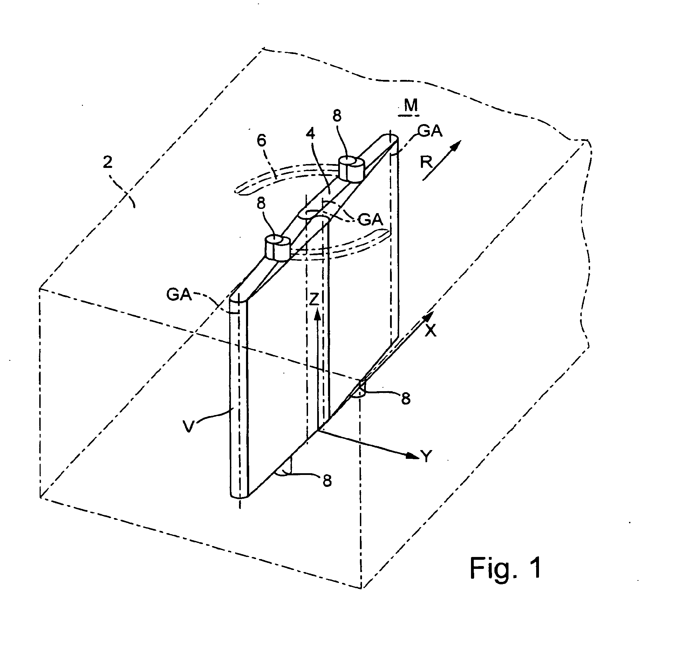

Figur 1 zeigt eine Vorrichtung 1 zur Steuerung einer Durchflussmenge eines in Strömungsrichtung R durch eine Strömungsleitung 2 strömenden fluiden Mediums M (im weiteren kurz Vorrichtung 1 genannt). Bei der Strömungsleitung 2 handelt es sich beispielsweise um eine Luftführungsleitung in einem Fahrzeug zur Klimatisierung des Fahrzeuginnenraums.

Die Vorrichtung 1 umfasst gemäß Ausführungsbeispiel vier Segmente 4, die gegenseitig gelenkig unter Bildung jeweils einer zugehörigen Gelenkachse GA angeordnet sind. Die Vorrichtung 1 bildet dabei durch entsprechende Stellung der Segmente 4 im Strömungsquerschnitt ein geschlossenes Vieleck V, welches durch Bewegung mindestens einer der Segmente 4 einen variierenden Strömungswiderstand im Strömungskanal oder in der Strömungsleitung 2 bildet. Wie in der Figur 1 gezeigt, wird die Strömungsleitung 2 axial vom Medium M entlang der Strömungsrichtung R durchströmt, d.h. das Strömungsmedium M ist im Wesentlichen in Richtung der Zentralachse X geführt. Die Vorrichtung 1 ist derart in der Strömungsleitung 2 angeordnet, dass die virtuelle Drehachse Z vertikal zur Zentralachse X oder in Richtung der Normalebene der Zentralachse X. Die Segmente 4 sind um die virtuelle Drehachse Z orthogonal zur Zentralachse X in der Strömungsleitung 2 angeordnet und weisen in ihrer Projektion auf die Normalebene der Zentralachse X quer und/oder längs zur Strömungsrichtung R Überlappungen auf. Mit anderen Worten: Wird das Strömungsmedium M im Wesentlichen in Richtung der Zentralachse X geführt, so wird durch Änderung der Stellung der gegeneinander gelenkig gelagerten Segmente 4 der Strömungsquerschnitt und der Strömungswiderstand für das Strömungsmedium M verändert. Hierzu ist je nach Aufbau der Strömungsleitung 2 mindestens eine Führungsschiene 6 in der Strömungsleitung 2 zum Führen mindestens einer der Segmente 4 vorgesehen. Alternativ zur Führung der Gelenkachsen GA in der Führungsschiene 6, z.B. in einer innenwandig in der Strömungsleitung 2 angeordneten Führungsnut, kann das jeweilige Segment 4 mit einem Zapfen 8 versehen sein, der in der Führungsschiene 6 geführt ist. Bevorzugt weist das jeweilige Segment 4 ober- und/oder unterseitig Zapfen 8 auf. Zur Änderung der Stellung mindestens einer der Segmente 4 greift an mindestens einem Zapfen 8 in näher dargestellter Art und Weise ein Motor oder Antrieb ein, durch die der Zapfen 8 sowohl in die eine wie auch in die andere Richtung entlang der Führungsschiene 6 bewegbar ist.

Je nach Art und Aufbau der Vorrichtung 1 können mehrere Führungsschienen 6 zum separaten Führen der Segmente 4 vorgesehen sein. Auch kann die Anzahl der Segmente 4 variieren. Insbesondere ist die Anzahl der Segmente 4 an die vorgegebene Querschnittsform der Strömungsleitung 2 und /oder an die Funktion der Durchflussmengensteuerung angepasst.

In der Figur 1 ist die Vorrichtung 1 in einer derartigen Stellung gebracht, dass die Strömungsleitung 2 zum Durchströmen des Mediums M im wesentlichen geöffnet ist. Hierzu sind die Segmente 4 stromlinienartig zueinander angeordnet, indem durch Bewegung mindestens einer der Segmente 4 diese längs zur Strömungsrichtung R angeordnet sind.

Je nach Anzahl und Anordnung der Segmente 4 zueinander, im Ausführungsbeispiel sind 4 Segmente unter Bildung des Vielecks V, insbesondere eines Vierecks im Strömungsquerschnitt vorgesehen, sind diese parallel und/oder in Reihe zueinander angeordnet und über die Gelenkachsen GA miteinander verbunden.

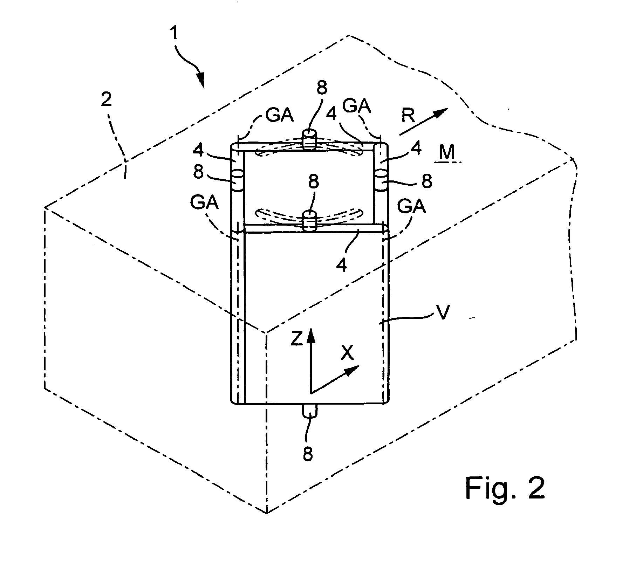

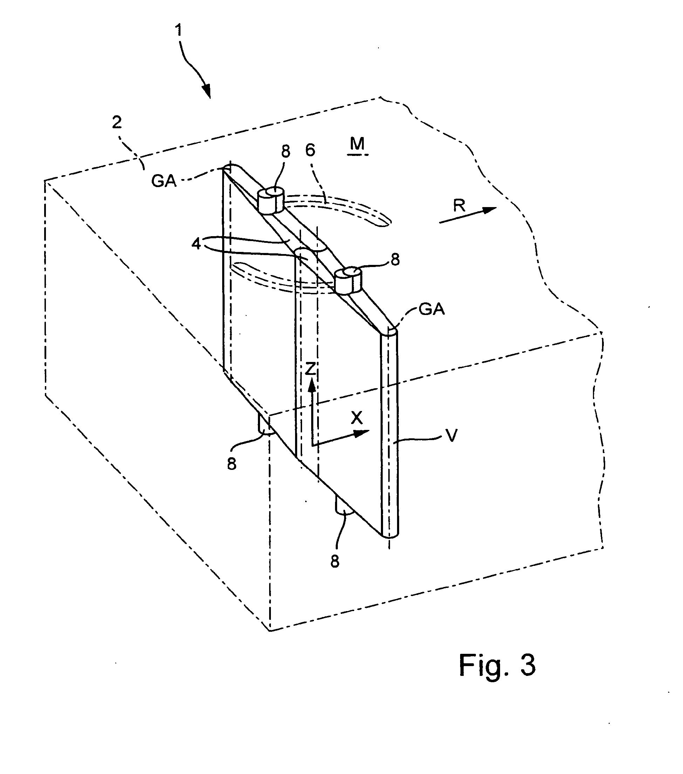

Figur 2 zeigt die Vorrichtung 1 in einer zumindest teilweise geschlossenen Stellung für die Strömungsleitung 2. Hierzu sind die Segmente 4 unter Bildung eines Vielecks V sowohl entlang der Strömungsrichtung R als auch teilweise quer zur Strömungsrichtung R angeordnet. Hierdurch bildet die Vorrichtung 1 einen strömungslinienartigen Vollkörper entlang der Strömungsrichtung R, so dass Totwasserzonen strömungsausgangsseitig sicher vermieden sind. Figur 3 zeigt die Vorrichtung 1 in geschlossener Stellung für die Strömungsleitung 2. Dabei sind die Segmente 4 quer zur Strömungsrichtung R in der Strömungsleitung 2 angeordnet.

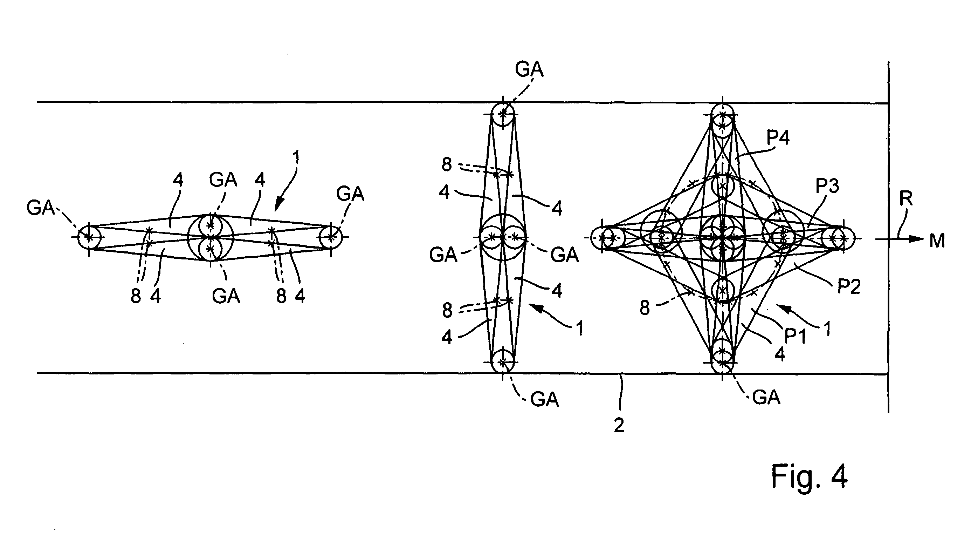

Figur 4 zeigt schematisch einen Längsschnitt durch eine Strömungsleitung 2 mit drei in Strömungsrichtung R nacheinander angeordneten Vorrichtungen 1. Die erste in Strömungsrichtung R gesehene Vorrichtung 1, insbesondere deren Segmente 4 sind derart angeordnet, dass ein weitgehend vollständiger Durchfluss des Mediums M in Strömungsrichtung R sichergestellt ist. Bedingt durch die weitgehend in Strömungsrichtung R gesehen linienartige Anordnung der Vorrichtung 1 in dieser Stellung in der Strömungsleitung 2 sind Verwirbelungen und Totwasserzonen sicher vermieden. Die Anordnung der Vorrichtung 1 bewirkt darüber hinaus eine weitgehend homogene Strömung. Die in Strömungsrichtung R gesehen mittlere Vorrichtung 1 ist mit den Segmenten 4 quer zur Strömungsrichtung R angeordnet und bewirkt ein Verschließen der Strömungsleitung 2. Die in Strömungsrichtung R gesehen letzte Vorrichtung 1 zeigt die durch Bewegung mindestens einer der Segmente 4 einstellbaren Positionen P1 bis P4 der Vorrichtung 1 zur Steuerung der Durchflussmenge von 0% bis 100% des Mediums M.

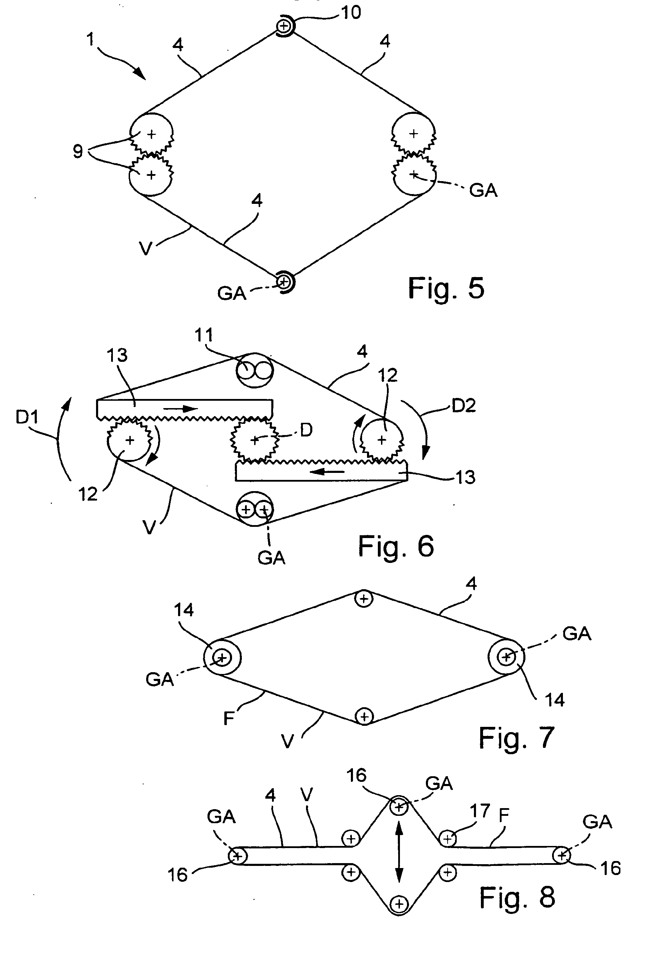

Für eine möglichst wartungsarme und verschleißfreie gelenkigen Anordnung der Segmente 4 zueinander können die Gelenkachsen GA verschiedenartig ausgeführt sein. In Figur 5, die keine erfindungsgemäße Vorrichtung darstellt, sind beispielhaft als Gelenkachsen GA ein Zahnrad-Gelenk 9 und ein Kniehebel-Gelenk 10 dargestellt. Figur 6, die keine erfindungsgemäße Vorrichtung darstellt, zeigt alternativ als Gelenkachsen GA ein Filmscharnier 11 und ein Zahnrad 12, welches in eine Zahnstange 13 eingreift auf. Die beiden Zahnstangen 13 greifen an einen gemeinsamen Drehpunkt D an, um den die Zahnstangen 13 drehbar angeordnet sind. Werden die Zahnstangen 13 in Pfeilrichtung D1 und D2 um den Drehpunkt D gedreht, so gleiten die Zahnräder 12 entlang auf den Drehpunkt D oder die Drehachse zu und das durch die Stellung der Segmente 4 gebildete Vieleck V ändert seine Form, wie in Figur 4 gezeigt.

Figur 7 zeigt als Gelenkachse GA eine Spindel 14, um welche anstelle von plattenförmigen Segmenten 4 eine Folie F gespannt verläuft. Eine alternative Ausführungsform der Gelenkachsen GA für eine Folienausführung der Segmente 4 ist in Figur 8 dargestellt. Dabei sind die Gelenkachsen GA als Wellen 16 ausgeführt, um welche ein Zahnriemen 17 mit Folie F geführt ist.

### Bezugszeichenliste

- 1: Vorrichtung zur Steuerung einer Durchflussmenge
- 2: Strömungsleitung
- 4: Segment
- 6: Führungsschiene
- 8: Zapfen
- 9: Zahnrad-Gelenk
- 10: Kniehebel-Gelenk
- 11: Filmscharnier
- 12: Zahnrad
- 13: Zahnstange
- 14: Spindel
- 16: Welle
- 17: Zahnriemen

- D: Drehpunkt
- D1, D2: Drehrichtung
- F: Folie
- GA: Gelenkachse
- M: Medium
- P1 bis P4: Position
- R: Strömungsrichtung
- V: Vieleck
- X: Zentralachse
- Z: virtuelle Drehachse

## Patentansprüche

1. Vorrichtung (1) zur Steuerung der Durchflussmenge eines fluiden Mediums (M) durch eine Strömungsleitung (2), wobei mindestens drei Segmente (4) derart gegenseitig gelenkig angeordnet sind, dass im Strömungsquerschnitt ein geschlossenes Vieleck (V) mit einem durch Bewegung mindestens eines der Segmente (4) variierenden Strömungswiderstand gebildet ist, wobei benachbarte Segmente (4) unter Bildung jeweils einer Gelenkachse (GA) miteinander verbunden sind, **dadurch gekennzeichnet dass**, die jeweilige Gelenkachse (GA) durch eine Welle (16) gebildet ist und die Segmente (4) durch eine Folie (F) gebildet sind, die um die Welle (16) verläuft.

2. Vorrichtung nach Anspruch 1, **dadurch gekennzeichnet, dass** mindestens eine Ecke des Vieleckes (V) als Drehpunkt (D) oder der Mittelpunkt des Vielecks (V) als Drehpunkt (D) bewegbar ist.

3. Vorrichtung nach Anspruch 1 oder 2, **dadurch gekennzeichnet, dass** das durch die Segmente (4) gebildete Vieleck (V) eine Trapezform aufweist.

4. Vorrichtung nach einem der Ansprüche 1 bis 3, **dadurch gekennzeichnet, dass** mindestens eine der Gelenkachsen (GA) in einer Führungsschiene (8) in der Strömungsleitung (2) geführt ist.

5. Strömungsleitung (2), insbesondere Luftführungsleitung, umfassend mindestens eine Vorrichtung (1) zur Steuerung der Durchflussmenge nach einem der Ansprüche 1 bis 4.

## Claims

1. Device (1) for controlling the flow volume of a fluid medium (M) through a flow line (4), wherein at least three segments (4) are mutually articulated such that a closed polygon (V) with a flow resistance varied by the movement of at least one of the segments (4) is formed in the flow cross-section, wherein adjacent segments (4) are joined to one another while forming an axis of articulation (GA), **characterised in that** each axis of articulation (GA) is represented by a shaft (16) and the segments (4) are represented by a foil (F) extending around the shaft (16).

2. Device according to claim 1, **characterised in that** at least one corner of the polygon (V) is movable as a pivot (D) or the centre of the polygon (V) is movable as a pivot (D).

3. Device according to claim 1 or 2, **characterised in that** the polygon (V) formed by the segments (4) has the shape of a trapezium.

4. Device according to any of claims 1 to 3, **characterised in that** at least one of the axes of articulation (GA) is guided in a guide rail (8) in the flow line (2).

5. Flow line (2), in particular air duct, comprising at least one device (1) for controlling the flow volume according to any of claims 1 to 4.

## Revendications

1. Dispositif (1) de régulation du débit d'un fluide (M) traversant une conduite d'écoulement (2), au moins trois segments (4) étant disposés de façon articulée entre eux, de manière telle qu'un polygone fermé (V) soit formé, dans la section d'écoulement, polygone ayant une résistance à l'écoulement variant sous l'effet du mouvement d'au moins l'un des segments (4), des segments adjacents (4) étant reliés entre eux en formant à chaque fois un axe articulé (GA),
**caractérisé en ce que** l'axe articulé respectif (GA) est formé par un arbre (16), et les segments (4) sont formés par une feuille (F) qui s' étend autour de l'arbre (16).

2. Dispositif selon 1a revendication 1, **caractérisé en ce qu'**au moins une partie angulaire du polygone (V) est mobile comme point de rotation (D), ou bien le point milieu du polygone (V) est mobile comme point de rotation (D).

3. Dispositif selon la revendication 1 ou 2, **caractérisé en ce que** le polygone (V) formé par les segments (4) présente une forme de trapèze.

4. Dispositif selon l'une quelconque des revendications 1 à 3, **caractérisé en ce qu'**au moins l'un des axes articulés (GA) est guidé, dans 1a conduite d'écoulement (2), dans un rail de guidage (8).

5. Conduite d'écoulement (2), en particulier conduite de guidage d'air comprenant au moins un dispositif (1) de régulation du débit selon l'une quelconque des revendications 1 à 4.
